# EUROPEAN PATENT APPLICATION

(11) **EP 3 872 554 A1**
(43) Date of publication of application: **01.09.2021**
(21) Application number: 21159465.0
(22) Date of filing: 26.02.2021
(51) Int. Cl.: G02B 21/22, G02B 21/00

(54) **MICROSCOPE SYSTEM, METHOD FOR A MICROSCOPE SYSTEM, AND COMPUTER PROGRAM**

(30) Priority: 27.02.2020 DE 102020105143
(71) Applicant: Leica Instruments (Singapore) Pte. Ltd., 608924 Singapore (SG)
(72) Inventor: Handloser, Matthias, 88131 Bodolz (DE)
(74) Representative: 2SPL Patentanwälte PartG mbB

(57) **Abstract**

Examples relate to a microscope system, and to a corresponding apparatus, method and computer program for a microscope system. The microscope system comprises an optical stereo microscope, configured to provide an optical stereoscopic view of a sample. The microscope system comprises an imaging sensor, configured to provide visual sensor data of the sample. The microscope system comprises a display device, configured to provide a visual overlay over the optical stereoscopic view within at least one optical path of the optical stereo microscope. The microscope system comprises one or more processors configured to process the visual sensor data to determine at least one dimension of the sample. The one or more processors are configured to provide a control signal to the display device based on the at least one dimension of the sample, such that the display device is configured to overlay information on the at least one dimension of the sample within the at least one optical path of the optical stereo microscope.

## Description

### Technical field

Examples relate to a microscope system, and to a corresponding apparatus, method and computer program for a microscope system.

### Background

A major usage of microscopes is in quality control and assembly, where tiny parts are inspected and/or assembled with the help of a microscope. In such applications, often stereo microscopes are used, as they allow for natural eye-hand coordination, and are comparatively cheap to manufacture.

### Summary

There may be a desire to provide an improved concept for a microscope for quality control and assembly.

This desire is addressed by the subject-matter of the independent claims.

Various embodiments of the present disclosure are based on a finding, that users of microscopes prefer "classic" stereoscopic microscopes when working in quality control or assembly, as such stereo microscopes allow for natural eye-hand coordination. Unfortunately, such microscopes lack the ability to measure precisely. On the other hand, quality control may benefit from the help of optical metrology, which is a field that relates to the measurement of objects under the microscope based on their optical properties. Such measurements are usually performed by telecentric microscopes, which may not allow to see the natural three-dimensional impression generated by the human brain. In general, telecentric microscopes that provide optical metrology do not support natural eye-hand coordination/motion. There may be a desire to provide an improved concept for a microscope that supports both optical metrology and natural eye-hand coordination/motion. Embodiments of the present disclosure thus combine an optical stereo microscope, which provides an optical stereoscopic view of a sample, with an additional imaging sensor, which is used to perform optical metrology. Information that is gained using the optical metrology is then inserted in at least one optical path of the stereo microscope, and is provided as an overlay that is superimposed on the optical stereoscopic view of the sample.

Embodiments of the present disclosure provide a microscope system. The microscope system comprises an optical stereo microscope, configured to provide an optical stereoscopic view of a sample. The microscope system comprises an imaging sensor, configured to provide visual sensor data of the sample. The microscope system comprises a display device, configured to provide a visual overlay over the optical stereoscopic view within at least one optical path of the optical stereo microscope. The microscope system comprises one or more processors configured to process the visual sensor data to determine at least one dimension of the sample. The one or more processors are configured to provide a control signal to the display device based on the at least one dimension of the sample, such that the display device is configured to overlay information on the at least one dimension of the sample within the at least one optical path of the optical stereo microscope. The determination of the at least one dimension can be performed using an additional sensor, which can be a telecentric sensor that at last partially uses an additional optical light path of the microscope system. By providing the information gained from the optical metrology as an overlay within at least one optical path, the optical stereoscopic view can be retained, which provides a natural eye-hand coordination.

For example, the one or more processors may be configured to determine the at least one dimension of the sample using optical metrology. Optical metrology may be used to precisely determine the at least one dimension of the sample.

In some embodiments, the one or more processors are configured to provide the control signal to the display device such, that the display device is configured to overlay a numerical representation of the at least one dimension of the sample within the optical path of the optical stereo microscope. The numerical representation may be used for quality control or assembly in a variety of scenarios, without requiring additional adaptation of the microscope system.

Alternatively or additionally, the one or more processors may be configured to compare the determined at least one dimension of the sample to at least one expected dimension of the sample, and to provide the control signal to the display device based on the comparison. Thus, quality control or assembly may be improved, as a comparison of the numerical representation with the expected dimensions of the sample can be taken over by the microscope system.

In some embodiments, the one or more processors may be configured to provide the control signal to the display device such, that the display device is configured to overlay a visual guide within the optical path of the optical stereo microscope. The visual guide may indicate whether the at least one dimension of the sample conforms to the at least one expected dimension of the sample. Accordingly, the visual guide may be used to quickly ascertain that the sample adheres to the expected dimension(s).

For example, the one or more processors may be configured to provide the control signal to the display device such, that at least a portion of the sample is highlighted by the overlay using one of a plurality of colors. The color may indicate whether the at least one dimension of the sample conforms to the at least one expected dimension of the sample. Using colors, the user can easily ascertain whether the sample adheres to the expected dimension(s). Additionally, if two or more dimensions are determined, the highlighting of at least a portion of the sample may show which dimension conforms to expectations, and which does not.

In some embodiments, the one or more processors are configured to identify a type of the sample among a plurality of types of samples based on the visual sensor data (e.g. using object recognition). The at least one expected dimension of the sample may be based on the identified type of the sample. In other words, the at least one expected dimension of the sample may be automatically retrieved based on the identification of the type of sample.

For example, the sample may be a component of a device. The plurality of types of samples may be a plurality of different components of the device. Thus, quality control or assembly operations on the device may be improved. Accordingly, the microscope system may be suitable for performing quality control on a plurality of different components of a device.

In some embodiments, the display device may comprise at least one display being arranged within the at least one optical path of the microscope system. For example, the display may be integrated within an augmented reality eyepiece of the microscope system.

Alternatively or additionally, the microscope system may comprise at least one mirror being arranged within the at least one optical path of the microscope system. The display device may be configured to provide the visual overlay by projecting the visual overlay onto the at least one mirror. The at least one mirror may be used to insert the overlay into the at least one optical path of the microscope.

In various embodiments, the optical stereo microscope is configured to provide the optical stereoscopic view of the sample via a first and a second optical path of the microscope system. The imaging sensor may be configured to obtain the visual sensor data of the sample via a third optical path of the microscope system. The third optical path may be at least partially separate from the first and second optical paths of the microscope system. Thus, the sensor might not interfere with the optical light paths of the optical stereo microscope.

Embodiments of the present disclosure further provide a system for a microscope system. The microscope system comprises an optical stereo microscope configured to provide an optical stereoscopic view of a sample, an imaging sensor and a display device. The system comprises one or more processors and one or more storage devices. The system is configured to obtain visual sensor data of the sample from an imaging sensor. The system is configured to process the visual sensor data to determine at least one dimension of the sample. The system is configured to provide a control signal to a display device of the microscope system based on the at least one dimension of the sample, such that the display device is configured to overlay information on the at least one dimension of the sample within at least one optical path of the optical stereo microscope.

Embodiments of the present disclosure further provide a method for a microscope system. The microscope system comprises an optical stereo microscope configured to provide an optical stereoscopic view of a sample, an imaging sensor and a display device. The method comprises obtaining visual sensor data of the sample from an imaging sensor. The method comprises processing the visual sensor data to determine at least one dimension of the sample. The method comprises providing a control signal to a display device of the microscope system based on the at least one dimension of the sample, such that the display device is configured to overlay information on the at least one dimension of the sample within at least one optical path of the optical stereo microscope.

Embodiments of the present disclosure further provide a computer program with a program code for performing the above method when the computer program is run on a processor.

### Short description of the Figures

Some examples of systems, apparatuses and/or methods will be described in the following by way of example only, and with reference to the accompanying figures, in which
Fig. 1a shows a schematic diagram of an embodiment of a microscope system;
Fig. 1b shows a schematic diagram of an embodiment of a system for a microscope system;
Figs. 1c shows a schematic diagram of an embodiment of a microscope system, where two mirrors are used to provide an overlay within two optical light paths of a stereo microscope;
Fig. 1d shows a schematic diagram of an embodiment of a microscope system, where two displays are used to provide an overlay within two optical light paths of a stereo microscope;
Fig. 2 shows a flow chart of an embodiment of a method for a microscope system;
Figs. 3a to 3d show schematic illustrations of different types of overlays being shown superimposed over a stereoscopic view of a sample; and
Fig. 4 shows a schematic diagram of a microscope system comprising a microscope and a computer system.

### Detailed Description

Various examples will now be described more fully with reference to the accompanying drawings in which some examples are illustrated. In the figures, the thicknesses of lines, layers and/or regions may be exaggerated for clarity.

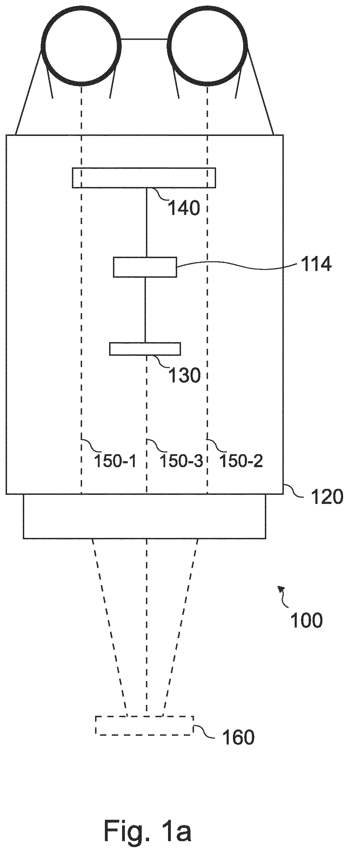

Fig. 1a shows a schematic diagram of an embodiment of a microscope system 100. The microscope system comprises an optical stereo microscope 120, configured to provide an optical stereoscopic view of a sample 160. The microscope system comprises an imaging sensor 130, configured to provide visual sensor data of the sample. The microscope system comprises a display device 140, configured to provide a visual overlay over the optical stereoscopic view within at least one optical path 150-1, 150-2 of the optical stereo microscope. The microscope system comprises one or more processors 114 configured to process the visual sensor data to determine at least one dimension of the sample. The one or more processors are configured to provide a control signal to the display device based on the at least one dimension of the sample, such that the display device is configured to overlay information on the at least one dimension of the sample within the at least one optical path of the optical stereo microscope.

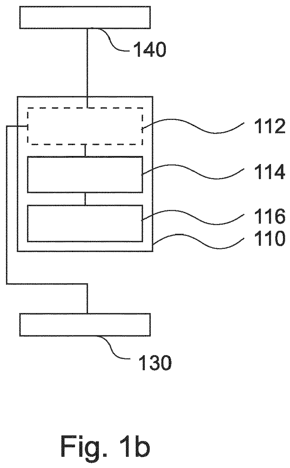

In the microscope system 100, the processing of the visual sensor data and the generation of the control signal is performed by the one or more processors. In some embodiments, the one or more processors are part of a system 110, which may be a computer system that is part of the microscope system 100 (e.g. integrated within the microscope, or operating from a remote location). Fig. 1b shows a schematic diagram of an embodiment of a system 110 for the microscope system 100N. The system comprises the one or more processors 114 and one or more storage devices 116. Optionally, the system comprises an interface 112. The one or more processors 114 are coupled to the one or more storage devices 116 and to the optional interface 112. In general, the functionality of the system 110 is provided by the one or more processors, e.g. in conjunction with the one or more storage devices (which may be used for storing information) and/or in conjunction with the interface. For example, the one or more processors may be configured to obtain the visual sensor data from the imaging sensor via the interface, and to provide the control signal to the display device via the interface.

The system 110 is configured to obtain the visual sensor data of the sample from the imaging sensor 130. The system is configured to process the visual sensor data to determine the at least one dimension of the sample. The system is configured to provide the control signal to the display device 140 of the microscope system 100 based on the at least one dimension of the sample, such that the display device is configured to overlay information on the at least one dimension of the sample within the at least one optical path of the optical stereo microscope 120.

The following description relates to the microscope system of Fig. 1a and to the system of Fig. 1b.

Embodiments of the present disclosure relate to a microscope system, and to a corresponding system, method and computer program for a microscope system. In general, a microscope is an optical instrument that is suitable for examining objects that are too small to be examined by the human eye (alone). For example, a microscope may provide an optical magnification of an object. In optical stereoscopic microscopes, the optical magnification is provided for an optical stereoscopic eyepiece, i.e. a user of the stereoscopic microscope observes the sample via at least one optical path through the microscope 120. The optical stereoscopic microscope 120 may further comprise one or more optical magnification components that are used to magnify a view on the sample.

In the context of this application, the microscope being used is an optical stereoscopic microscope (short "stereo microscope"). In general, an optical stereoscopic microscope is characterized by two properties - it provides a stereoscopic view on the sample, and it does so using (only) optical components. For example, the optical stereoscopic microscope may be configured to provide the optical stereoscopic view of the sample not via a combination of an optical sensor and eyepieces comprising displays. In other words, the stereoscopic view of the sample is provided without the help of a display. Indeed, the display device is merely used to provide the overlay over the optical stereoscopic view. The optical stereoscopic view itself may be provided without the help of a display or imaging sensor.

There are a variety of different types of microscopes. A primary application of the concepts described herein is in microscope systems for quality control or assembly. For example, the microscope 120 and/or the microscope system 100 may be a microscope / microscope system that is suitable for quality control applications or for assembly applications. For example, a user may use the microscope system to examine components of a device, e.g. for quality control purposes, or during assembly of the device. Alternatively, the microscope may be used in other fields. If the microscope system is used in the medical or biological fields, the object being viewed through the microscope may be a sample of organic tissue, e.g. arranged within a petri dish or present in a part of a body of a patient. For example, the microscope system 100 may be a microscope system for use in a laboratory, e.g. a microscope that may be used to examine the sample of organic tissue in a petri dish. Although embodiments are described in connection with a microscope system, they may also be applied, in a more general manner, to any optical device.

The microscope system comprises the imaging sensor 130, which is configured to provide the visual sensor data of the sample. For example, the imaging sensor 130 may comprise or be an APS (Active Pixel Sensor) - or a CCD (Charge-Coupled-Device)-based imaging sensor. For example, in APS-based imaging sensors, light is recorded at each pixel using a photodetector and an active amplifier of the pixel. APS-based imaging sensors are often based on CMOS (Complementary Metal-Oxide-Semiconductor) or S-CMOS (Scientific CMOS) technology. In CCD-based imaging sensors, incoming photons are converted into electron charges at a semiconductor-oxide interface, which are subsequently moved between capacitive bins in the imaging sensor modules by a control circuitry of the imaging sensor to perform the imaging.

In general, the visual sensor data may be two-dimensional image data. For example, the visual sensor data may comprise a two-dimensional array of pixels, e.g. a two-dimensional array of color pixels or a two-dimensional array of monochrome pixels. In some embodiments, however, the visual sensor data may comprise depth sensor data, with the imaging sensor being an optical depth sensor, such as an infrared light-based Time of Flight sensor or a structured light sensor. The visual sensor data may be obtained by receiving the visual sensor data from the imaging sensor (e.g. via the interface 112), by reading the visual sensor data out from a memory of the optical imaging sensor (e.g. via the interface 112), or by reading the visual sensor data a from a storage device 116 of the system 110, e.g. after the visual sensor data has been written to the storage device 116 by the imaging sensor or by another system or processor.

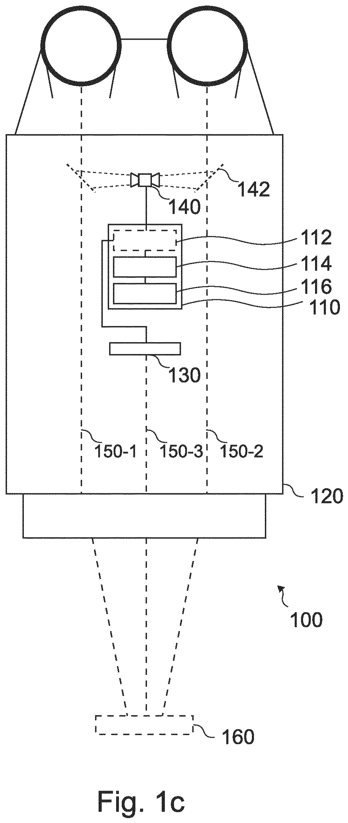

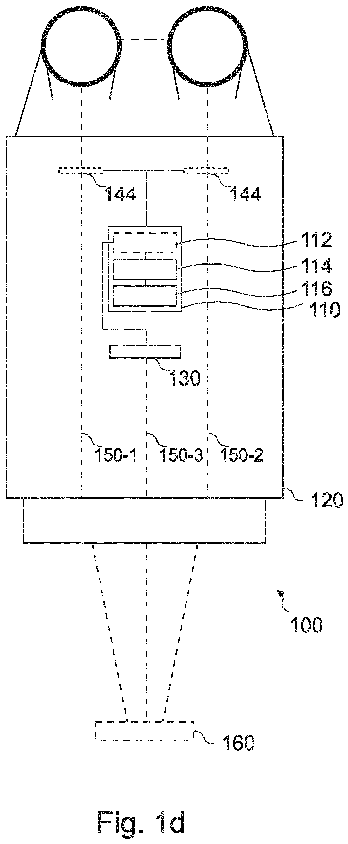

In general, an optical stereoscopic microscope comprises two optical paths, to provide the stereoscopic view of the sample. In other words, the optical stereo microscope may be configured to provide the optical stereoscopic view of the sample via a first 150-1 and a second 150-2 optical path of the microscope (system), as shown in Figs. 1a, 1c and 1d. For example, each optical path may comprise separate optical elements, such as eyepieces or zoom lenses. In various types of optical stereoscopic microscopes, denoted "common main objective", the objective of the microscope is shared by both optical paths. In other types, denoted "Green-ough" microscopes, each optical path comprises a separate objective. The two optical paths of the stereo microscopes intersect at the sample, to provide the stereoscopic view of the sample. Both the first and second optical path may be directed at the sample from a (slight) angle.

In various embodiments, the microscope / microscope system may comprise a third optical path 150-3 (see Figs. 1a, 1c and 1d) that is used by the imaging sensor. For example, the imaging sensor may be configured to obtain the visual sensor data of the sample via the third optical path 150-3 of the microscope / microscope system. For example, the third optical path may be at least partially separate from the first and second optical paths of the microscope system. For example, the first, second and third optical paths may share the objective of the microscope, but may be otherwise separate. Alternatively, a separate lens may be used for the imaging sensor. For example, the microscope system may comprise a telecentric lens for the imaging sensor. In general, the third optical path may be a telecentric optical (beam) path. The imaging sensor (or at least optical components used with the imaging sensor) may be arranged in a centered position of the microscope / microscope system.

The one or more processors are configured to process the visual sensor data to determine at least one dimension of the sample. In other words, the one or more processors may be configured to derive the at least one dimension of the sample from the visual sensor data, the visual sensor data showing the sample. For example, optical metrology may be used to determine the at least one dimension of the sample. In other words, the one or more processors may be configured to determine the at least one dimension of the sample using optical metrology. In general, optical metrology is the science (and related technology) of performing measurements using light. In particular, optical metrology may be used to identify the dimensions of objects using light. In general, different approaches may be used to perform optical metrology. For example, a laser may be used to project and sweep a point, a line or a pattern across the sample. The sample may be scanned using the laser projection. Based on the laser projection, which may be represented by the visual sensor data, the optical metrology may be performed. Accordingly, the microscope may comprise a light source for providing the laser projection. Alternatively or additionally, other approaches may be used, such as optical interferometry, or passive optical metrology.

In this context, the term "dimensions" refers to the length, width, and/or diameter etc. of the sample, e.g. of one or more features/components of the sample. The sample may comprise one or more features/components. To give an example - the sample may be a cogwheel (i.e. a gear), which is a machine part (that usually rotates), which comprises a plurality of teeth/cogs at its outer perimeter. In this case, the plurality of teeth/cogs of the cogwheel may be features of the cogwheel, and the one or more processors may be configured to determine the length and/or width of the plurality of the teeth as dimensions of the sample. For example, the one or more processors may be configured to determine the contours of the sample (e.g. of the cogwheel). The one or more processors may be configured to determine the features and/of components of the sample based on the determined contours of the sample (e.g. the cogs of the cogwheel). Additionally or additionally, the one or more processors may be configured to determine a diameter of the cogwheel, which may be another dimension of the sample. If the sample comprises multiple components, e.g. multiple cogwheels that interact with each other, the dimensions may be determine separately for the different components of the sample. Thus, each of the at least one dimension of the sample may refer to a length or a width (or a diameter) of at least one feature of the sample (e.g. a feature of a component of the sample).

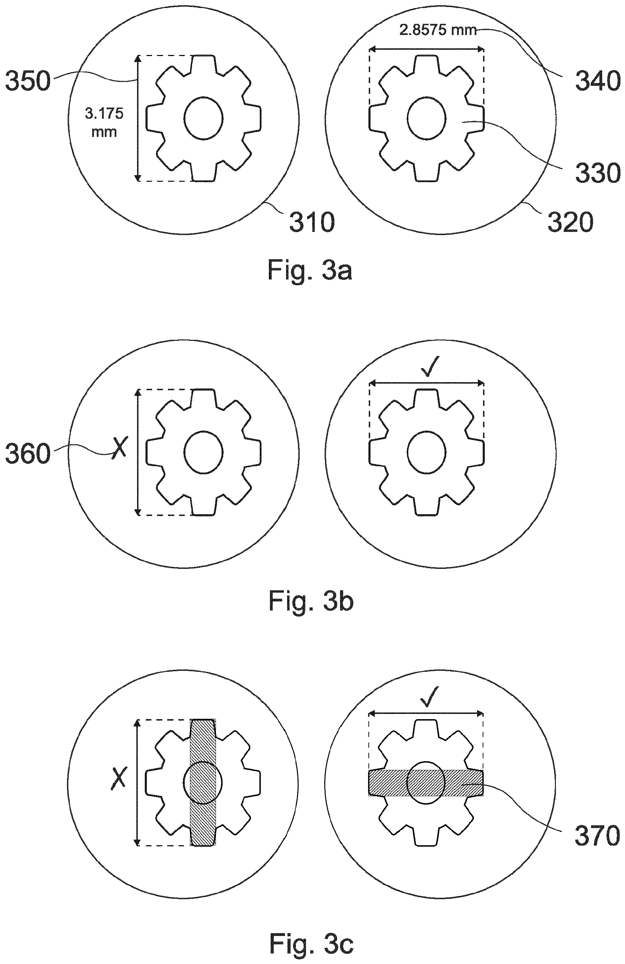

Based on the determine dimension or dimensions, the overlay is generated, which comprises information on the dimension or dimensions. In a universally applicable embodiment, a numerical representation of the dimensions or dimensions may be shown in the overlay. In other words, the one or more processors may be configured to provide the control signal to the display device such, that the display device is configured to overlay a numerical representation of the at least one dimension of the sample within the optical path of the optical stereo microscope. For example, the numerical representation of the at least one dimension of the sample may be shown using metric or imperial units, such as µm or mm, µin or mil. In some embodiments, the numerical representation of the at least one dimension may be shown as deviation from at least one expected dimension of the sample, e.g. with a plus or minus sign and an absolute or relative (e.g. in percent) numerical representation of the deviation. In various embodiments, the feature or component that the at least one dimensions relates to may be highlighted in the overlay, e.g. using a visual marker. Fig. 3a shows an example of a numerical representation being shown overlaid over the stereoscopic view. For example, different dimensions (e.g. lateral and vertical dimensions) may be shown overlaid over the two views provided by the stereoscopic oculars, e.g. the vertical dimension on the left, and the lateral dimension on the right, as shown in Fig. 3a.

As has been introduced above, the at least one dimension of the sample may be compared with an expected dimension of the at least one dimension. For example, embodiments may be used in quality control or assembly. In quality control, a major factor are the dimensions of components and workpieces. In particular, these components and workpieces need to adhere to specifications, and may thus be compared to the dimension or dimensions set out by the specifications. Accordingly, the one or more processors may be configured to compare the determined at least one dimension of the sample to at least one expected dimension of the sample. For example, the at least one expected dimensions of the sample may be defined by the specification/specifications of the sample. The one or more processors may be configured to provide the control signal to the display device based on the comparison. For example, overlay may show a result of the comparison, e.g. as a numerical representation (see above), or using other visualization.

In some embodiments, the numerical representation of the at last one dimension (or of the deviation of the at least one dimension from the expected at least one dimensions) might not be required. It might suffice, that the user of the microscope system is shown whether the sample conforms to expectations (e.g. to specification). In other words, the one or more processors may be configured to provide the control signal to the display device such, that the display device is configured to overlay a visual guide within the optical path of the optical stereo microscope. The visual guide may indicate whether the at least one dimension of the sample conforms to the at least one expected dimension of the sample, e.g. either that it conforms, or that it does not. In some cases, a third option may be shown if the at least one dimension is close to exceeding a tolerance defined by the at least one expected dimension. This may be achieved using different approaches. For example, an icon may be shown that indicates, whether the at least one dimension of the sample conforms to the at least one expected dimension of the sample, e.g. a checkmark if the at least one dimension conforms, and an "x" if it does not (see e.g. Figs. 3b or 3c). Alternatively, a text may be shown, such as "Inspection Passed" or "Inspection Failed".

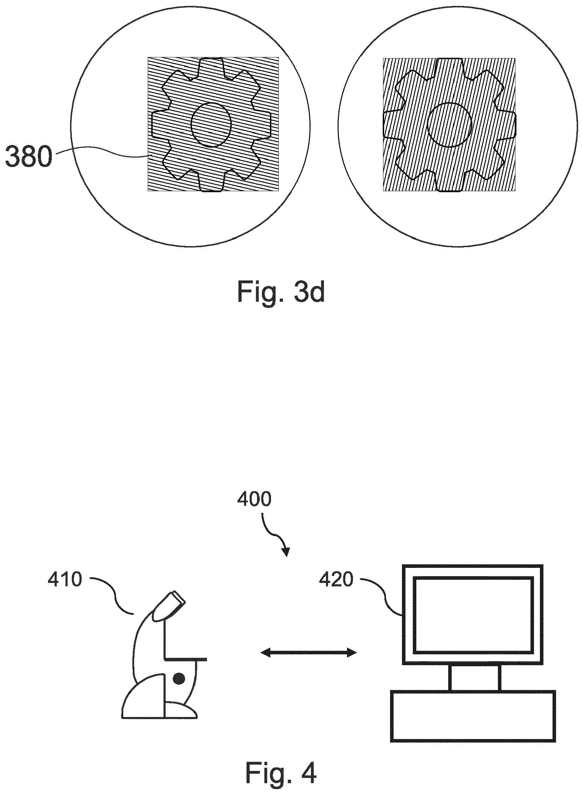

Alternatively or additionally, different colors may be used. For example, at least a portion of the sample may be highlighted using a color. In other words, the one or more processors may be configured to provide the control signal to the display device such, that at least a portion of the sample is highlighted by the overlay using one of a plurality of colors. The color may indicate whether the at least one dimension of the sample conforms to the at least one expected dimension of the sample. For example, the plurality of colors may comprise two colors, e.g. green and red. At least a portion of the sample may be highlighted by the overlay using green if the at least one dimension of the sample conforms to the at least one expected dimension of the sample, and using red if the at least one dimension of the sample does not conform to the at least one expected dimension of the sample (e.g. as shown in Figs. 3c and 3d). Alternatively, the plurality of colors may comprise three colors, e.g. green, yellow and red, with yellow indicating, that the at least one dimension is close to exceeding a tolerance defined by the at least one expected dimension.

In some scenarios, only one type of sample might be inspected using the microscope system. In other scenarios, however, the microscope system may be used to inspect a variety of different samples. For example, the microscope system may be used (and thus suitable) for performing quality control on a plurality of different components of a device. In addition to determining the at least one dimension of the sample, the visual sensor data may also be used to determine which component is being expected, and to select the corresponding at least one expected dimensions of the sample. In other words, the one or more processors may be configured to identify a type of the sample among a plurality of types of samples based on the visual sensor data. For example, the sample may be a component of a device. The plurality of types of samples may be a plurality of different components of the device (or a plurality of different components of the device and of one or more other devices). For example, information on the plurality of types of samples may be stored within a storage device 116, such as their expected at least one dimension and a visual representation of the types of samples. The one or more processors 114 may be configured to determine the contours of the sample within the visual sensor data, and compare the contours of the sample to the visual representations of the plurality of types of samples to identify the sample among the plurality of types of samples. The at least one expected dimension of the sample may be based on the identified type of the sample. For example, the one or more processors may be configured to retrieve information on the at least one expected dimension of the sample from the storage device.

The one or more processors are configured to provide the control signal to the display device based on the at least one dimension of the sample. In general, the control signal may comprise display data, i.e. the control signal may be a display signal, for providing the display device with information to overlay over the stereoscopic view of the sample. In some embodiments, however, the control signal might only comprise the information to be overlaid and a position the information is to be overlaid at, and the display device may be configured to generate the overlay based on the provided information. The control signal is generated such that the display device is configured to overlay information on the at least one dimension of the sample within the at least one optical path of the optical stereoscopic microscope. For example, most stereoscopic microscopes have a first and a second optical path for providing the optical stereoscopic view on the sample. The control signal may be generated such that the display device is configured to overlay information on the at least one dimension of the sample within the first and the second optical path of the optical stereoscopic microscope. For example, the control signal may be generated such that the display device is configured to overlay distinct/different information on the at least one dimension within the first and the second optical path of the optical stereoscopic microscope, i.e. such that different information is overlaid in the different optical paths.

The display device 140 is configured to provide the visual overlay over the optical stereoscopic view within the at least one optical path 150-1, 150-2 of the optical stereo microscope. There are different approaches for overlaying information over an optical view. In a first approach, a mirror/mirrors may be used to provide the visual overlay. For example, a mirror may be included in each of the first and second optical path, and the overlay may be projected onto the mirror, and thus optically overlaid over the optical stereoscopic view of the sample. In other words, the microscope system may comprise at least one mirror 142 that is arranged within the at least one optical path of the microscope system. For example, the microscope system may comprise two mirrors 142 that are arranged within the first and second optical path of the microscope/microscope system. For example, the mirrors may be adapted such, that the optical stereoscopic view passes through the at least one mirror, and is merged with the overlay by the mirror. Thus, the at least one mirror 142 may be at least one one-way mirror, arranged such that the projected overlay is reflected and such that the optical stereoscopic view passes through the at least one one-way mirror (or vice versa, where the optical stereoscopic view is reflected and the projection passes through). For example, the at least one mirror may be implemented by at least one prism of the optical stereoscopic microscope. The display device may be configured to provide the visual overlay by projecting the visual overlay onto (i.e. towards) the at least one mirror, e.g. such that the visual overlay is reflected towards an eyepiece of the microscope, e.g. in parallel with the optical stereoscopic view of the sample. Figs. 1c shows a schematic diagram of an embodiment of a microscope system, where two mirrors 142 are used to provide an overlay within two optical light paths of a stereo microscope.

Alternatively, a display or displays may be used to provide the overlay within the at least one optical path of the microscope. In other words, the display device may comprise at least one display 144 being arranged within the at least one optical path of the microscope system. Fig. 1d shows a schematic diagram of an embodiment of a microscope system, where two displays are used to provide an overlay within two optical light paths of a stereo microscope. For example, the at least one display may be one of a projection-based display and a screen-based display, such as a Liquid Crystal Display (LCD) - or an Organic Light Emitting Diode (OLED)-based display. For example, as shown in Fig. 1d, two displays 144 may be arranged within the first and second optical path (i.e. one each). For example, the at least one display may be arranged within the eyepiece of the optical stereoscopic microscope, e.g. one display in each of the oculars. For example, two displays may be used to turn the oculars of the optical stereoscopic microscope into augmented reality oculars, i.e. an augmented reality eyepiece. Alternatively, other technologies may be used to implement the augmented reality eyepiece/oculars.

In both approaches, calibration, e.g. factory calibration or user calibration, may be performed to align the overlay with the optical stereoscopic view of the sample.

The interface 112 may correspond to one or more inputs and/or outputs for receiving and/or transmitting information, which may be in digital (bit) values according to a specified code, within a module, between modules or between modules of different entities. For example, the interface 112 may comprise interface circuitry configured to receive and/or transmit information. In embodiments the one or more processors 114 may be implemented using one or more processing units, one or more processing devices, any means for processing, such as a processor, a computer or a programmable hardware component being operable with accordingly adapted software. In other words, the described function of the one or more processors 114 may as well be implemented in software, which is then executed on one or more programmable hardware components. Such hardware components may comprise a general-purpose processor, a Digital Signal Processor (DSP), a micro-controller, etc. In at least some embodiments, the one or more storage devices 116 may comprise at least one element of the group of a computer readable storage medium, such as an magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

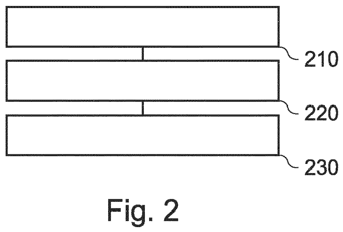

Fig. 2 shows a flow chart of an embodiment of a corresponding method for a microscope system, e.g. for the microscope system of Figs. 1a to 1d. The microscope system comprises an optical stereo microscope configured to provide an optical stereoscopic view of a sample, an imaging sensor and a display device. The method comprises obtaining 210 visual sensor data of the sample from the imaging sensor. The method comprises processing 220 the visual sensor data to determine at least one dimension of the sample. The method comprises providing 230 a control signal to a display device of the microscope system based on the at least one dimension of the sample, such that the display device is configured to overlay information on the at least one dimension of the sample within at least one optical path of the optical stereo microscope.

As indicated above, features described in connection with the system 110 and the microscope system 100 of Figs. 1a to 1d may be likewise applied to the method of Fig. 2.

More details and aspects of the method are mentioned in connection with the proposed concept or one or more examples described above or below (e.g. Fig. 1a to 1d, 3a to 4). The method may comprise one or more additional optional features corresponding to one or more aspects of the proposed concept or one or more examples described above or below.

Figs. 3a to 3d show schematic illustrations of different types of overlays being shown superimposed over a stereoscopic view of a sample. In Figs. 3a to 3d, the stereoscopic view through two oculars 310, 320 on a sample 330 may be shown (providing the stereoscopic view on the sample with the overlay shown superimposed), wherein two different representations of the at least one dimensions, or two different dimensions, are shown through the two oculars. In some embodiments, such a representation may be chosen. In some embodiments, however, only one of the two representations may be shown through both oculars.

In Fig. 3a, an example is shown wherein the information on the at least one dimensions is shown in a numerical representation 340. Furthermore, a guide 350 is shown that indicates the dimension being (numerically) represented.

In Fig. 3b, an example is shown, wherein an icon 360 is shown that indicates, whether the at least one dimension of the sample conforms to the at least one expected dimension of the sample.

In Fig. 3c, an example is shown, wherein a portion of the sample is highlighted 370 using different colors, indicating whether the corresponding dimension of the sample conforms to the at least one expected dimension of the sample.

In Fig. 3d, an example is shown, wherein the entire sample is highlighted 380 using different colors, indicating whether the sample conforms to the at least one expected dimensions of the sample.

More details and aspects of the visual representation of the overlay are mentioned in connection with the proposed concept or one or more examples described above or below (e.g. Fig. 1a to 2, 4). The visual representation of the overlay may comprise one or more additional optional features corresponding to one or more aspects of the proposed concept or one or more examples described above or below.

Various embodiments of the present disclosure provide a stereoscopic measurement device for QC (Quality Control) in assembly or other sample modification (e.g. in the surgical field). Various embodiments may thus provide stereo metrology, i.e. a stereoscopic view on a sample combined with a metrology-based overlay.

Optical metrology is becoming more and more prominent in QC and Assembly. In QC, however, stereo microscopes are preferred, as they provide a more intuitive manipulation of the sample. On the other hand, stereo microscopes lack the ability to measure precisely. Telecentric microscope may provide such an ability, but may not allow to see the natural three-dimensional impression generated by the human brain. In general, other measurement scopes do not support natural eye-hand coordination/motion.

In various embodiments, a telecentric optical beam path with fixed or zoom optics is incorporated into a classical stereo microscope and equipped with a digital camera (i.e. the imaging sensor). The user can therefore still make use of optimum eye hand coordination by looking through the oculars of the stereo microscope and the respective natural three-dimensional impression (i.e. fusion optics) during assembly or modification of the sample by any means. Simultaneously, the telecentric optical data (i.e. the visual sensor data) may be recorded from the field of view to extract dimension/distances. This data may be then further processed to allow for overlapping (i.e. overlaying) the measurement dimensions obtained by the measurement beam path with the stereoscopic image (i.e. injected in augmented reality eyepieces). This allows for continuous quality control (pass-fail analysis) during assembly or other modifications of the sample.

Embodiments of the present disclosure may thus provide a Stereo microscope with digital camera, e.g. a stereo microscope comprising of third optical beam path (telecentric for measurement) with a second digital camera. Additionally or alternatively, embodiments may provide augmented reality eyepieces to inject information obtained from processed telecentric optical data. Embodiments may further provide a computer (internal or external, e.g. the one or more processors 114, and/or the computer system 420 of Fig. 4) to perform data processing (extraction of dimension, autodetect of contour/shape and building overlay or indicating pass/fail on pre-selected criteria).

More details and aspects of the microscope system are mentioned in connection with the proposed concept or one or more examples described above or below (e.g. Fig. 1a to 3d, 4). The microscope system may comprise one or more additional optional features corresponding to one or more aspects of the proposed concept or one or more examples described above or below.

Some embodiments relate to a microscope comprising a system as described in connection with one or more of the Figs. 1a to 3d. Alternatively, a microscope may be part of or connected to a system as described in connection with one or more of the Figs. 1a to 3d. Fig. 4 shows a schematic diagram of a microscope system comprising a microscope and a computer system. Fig. 4 shows a schematic illustration of a system 400 configured to perform a method described herein. The system 400 comprises a microscope 410 and a computer system 420. The microscope 410 is configured to take images and is connected to the computer system 420. The computer system 420 is configured to execute at least a part of a method described herein. The computer system 420 may be configured to execute a machine learning algorithm. The computer system 420 and microscope 410 may be separate entities but can also be integrated together in one common housing. The computer system 420 may be part of a central processing system of the microscope 410 and/or the computer system 420 may be part of a subcomponent of the microscope 410, such as a sensor, an actor, a camera or an illumination unit, etc. of the microscope 410.

The computer system 420 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 420 may comprise any circuit or combination of circuits. In one embodiment, the computer system 420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 420 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 420 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 420 may also include a display device, one or more speakers, and a keyboard and/or controller, which can include a mouse, trackball, touch screen, voice-recognition device, or any other device that permits a system user to input information into and receive information from the computer system 420.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference Signs

- 100: Microscope system
- 110: System
- 112: Interface
- 114: One or more processors
- 116: One or more storage devices
- 120: Optical stereoscopic microscope
- 130: Imaging sensor
- 140: Display device
- 142: Mirror
- 144: Display
- 150: Optical paths
- 150-1: First optical path
- 150-2: Second optical path
- 150-3: Third optical path
- 160: Sample
- 210: Obtaining visual sensor data
- 220: Processing the visual sensor data
- 230: Providing a control signal
- 310: View through first ocular
- 320: View through second ocular
- 330: Sample
- 340: Numerical representation
- 350: Guide
- 360: Icon
- 370: Highlighted portion of sample
- 380: Highlighted sample
- 400: Microscope system
- 410: Microscope
- 420: Computer system

## Claims

1. A microscope system (100; 400) comprising:
an optical stereo microscope (120), configured to provide an optical stereoscopic view of a sample (160);
an imaging sensor (130), configured to provide visual sensor data of the sample;
a display device (140), configured to provide a visual overlay over the optical stereoscopic view within at least one optical path (150-1, 150-2) of the optical stereo microscope; and
one or more processors (114) configured to:
process the visual sensor data to determine at least one dimension of the sample, and
provide a control signal to the display device based on the at least one dimension of the sample, such that the display device is configured to overlay information on the at least one dimension of the sample within the at least one optical path of the optical stereo microscope.

2. The microscope system according to claim 1, wherein the one or more processors are configured to determine the at least one dimension of the sample using optical metrology.

3. The microscope system according to one of the claims 1 to 2, wherein the one or more processors are configured to provide the control signal to the display device such, that the display device is configured to overlay a numerical representation of the at least one dimension of the sample within the optical path of the optical stereo microscope.

4. The microscope system according to one of the claims 1 to 3, wherein the one or more processors are configured to compare the determined at least one dimension of the sample to at least one expected dimension of the sample, and to provide the control signal to the display device based on the comparison.

5. The microscope system according to claim 4, wherein the one or more processors are configured to provide the control signal to the display device such, that the display device is configured to overlay a visual guide within the optical path of the optical stereo microscope, the visual guide indicating whether the at least one dimension of the sample conforms to the at least one expected dimension of the sample.

6. The microscope system according to claim 5, wherein the one or more processors are configured to provide the control signal to the display device such, that at least a portion of the sample is highlighted by the overlay using one of a plurality of colors, the color indicating whether the at least one dimension of the sample conforms to the at least one expected dimension of the sample.

7. The microscope system according to one of the claims 4 to 6, wherein the one or more processors are configured to identify a type of the sample among a plurality of types of samples based on the visual sensor data, wherein the at least one expected dimension of the sample is based on the identified type of the sample.

8. The microscope system according to claim 7, wherein the sample is a component of a device, wherein the plurality of types of samples are a plurality of different components of the device.

9. The microscope system according to claim 8, wherein the microscope system is suitable for performing quality control on a plurality of different components of a device.

10. The microscope system according to one of the claims 1 to 9, wherein the display device comprises at least one display (144) being arranged within the at least one optical path of the microscope system.

11. The microscope system according to one of the claims 1 to 9 comprising at least one mirror (142) being arranged within the at least one optical path of the microscope system, wherein the display device is configured to provide the visual overlay by projecting the visual overlay onto the at least one mirror.

12. The microscope system according to one of the claims 1 to 11, wherein the optical stereo microscope is configured to provide the optical stereoscopic view of the sample via a first (150-1) and a second (150-2) optical path of the microscope system, wherein the imaging sensor is configured to obtain the visual sensor data of the sample via a third optical path (150-3) of the microscope system, the third optical path being at least partially separate from the first and second optical paths of the microscope system.

13. System (110; 420) for a microscope system (100; 400), the microscope system comprising an optical stereo microscope (120; 410) configured to provide an optical stereoscopic view of a sample (160), an imaging sensor (130) and a display device (140), the system comprising one or more processors (114) and one or more storage devices (116), wherein the system (110) is configured to:
obtain visual sensor data of the sample from an imaging sensor (130);
process the visual sensor data to determine at least one dimension of the sample; and
provide a control signal to a display device (140) of the microscope system (100) based on the at least one dimension of the sample, such that the display device is configured to overlay information on the at least one dimension of the sample within at least one optical path of the optical stereo microscope (120).

14. Method for a microscope system, the microscope system comprising an optical stereo microscope configured to provide an optical stereoscopic view of a sample, an imaging sensor and a display device, the method comprising:
obtaining (210) visual sensor data of the sample from an imaging sensor;
processing (220) the visual sensor data to determine at least one dimension of the sample; and
providing (230) a control signal to a display device of the microscope system based on the at least one dimension of the sample, such that the display device is configured to overlay information on the at least one dimension of the sample within at least one optical path of the optical stereo microscope.

15. Computer program with a program code for performing the method according to claim 14 when the computer program is run on a processor.
